(19) Europäisches Patentamt
European Patent Office
Office européen des brevets

(11) **EP 4 745 583 A1**

(12) **EUROPEAN PATENT APPLICATION**

(43) Date of publication:
**20.05.2026 Bulletin 2026/21**

(21) Application number: **24213963.2**

(22) Date of filing: **19.11.2024**

(51) International Patent Classification (IPC):
**G01P 15/093** (2006.01)   **G01B 11/00** (2006.01)
**G01D 11/30** (2006.01)   **G01V 1/18** (2006.01)
**G01P 15/18** (2013.01)

(52) Cooperative Patent Classification (CPC):
**G01P 15/093; G01B 11/002; G01V 1/18;**
G01P 15/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Österreichische Akademie der Wissenschaften**
  **1010 Wien (AT)**
- **Universität Wien**
  **1010 Vienna (AT)**

(72) Inventors:
- **Hepach, Hans**
  **1160 Wien (AT)**
- **Dragosits, Mathias**
  **1100 Wien (AT)**

(74) Representative: **Patentanwaltskanzlei Matschnig & Forsthuber OG**
  **Biberstraße 22**
  **Postfach 36**
  **1010 Wien (AT)**

(54) **SENSOR DEVICE FOR SIMULTANEOUS MEASUREMENT OF UP TO SIX MOTIONAL DEGREES OF FREEDOM OF A TEST-MASS**

(57)    Sensor device (1) for simultaneous measurement of up to six motional degrees of freedom of a test mass (2), wherein the sensor device comprises a housing frame (3), a test mass (2), wherein the test mass is moveably attached to the housing frame (3), said test mass (2) is configured to reflect impinging laser light, a laser light system (4), configured to generate a plurality of laser beams (LB) and to direct each of said laser beams (LB) to the test mass (2), a detector system (5), comprising a plurality of position-sensitive detectors (PSD), wherein each detector (PSD) is configured to detect laser light reflected from the test mass (2), a processor, configured to receive signals created by the plurality of detectors (PSD) and to determine the position and orientation of the test mass (2) relative to the housing frame (3), wherein the housing frame (3) comprises suspension elements (6), by means of which the test mass (2) is suspended from mounting sites (7) of the housing frame (3) during a measurement of the up to six motional degrees of freedom the test mass (2).

Fig. 2a

EP 4 745 583 A1

## Description

### Field of the Invention

The invention relates to a sensor device for measuring movement or acceleration, and more specifically, to a sensor device for simultaneous measurement of up to six motional degrees of freedom of a test mass, wherein the sensor device comprises:

* a housing frame,

* a test mass, wherein the test mass is moveably attached to the housing frame, said test mass comprises a base and at least three, preferably four, side faces, wherein each side face is configured to reflect impinging laser light,

* a laser light system, configured to generate a plurality of laser beams and to direct each of said laser beams to a respective side face of the test mass,

* a detector system, comprising a plurality of position-sensitive detectors, wherein each detector of said plurality of position-sensitive detectors comprises a detector surface, wherein each detector is assigned to a respective side face of the test mass, and is positioned such that a respective laser beam is reflected towards the detector surface of the respective detector by the side face to which the respective detector is assigned, wherein the plurality of detectors is configured to create a plurality of signals, wherein each signal is indicative of a position of the respective reflected laser beam on the respective detector surface,

* a processor, configured to receive the plurality of signals created by the plurality of detectors and to determine the position and orientation of the test mass relative to the housing frame based on the detected positions of the reflected laser beams on the detector surfaces, wherein a detected change of the position of a specific reflected laser beam on the respective detector surface is indicative of a change of the position and/or orientation of the test mass relative to the housing frame.

The invention further relates to a sensor for detecting seismic activity, in particular earthquakes, said sensor comprising a sensor device as described above.

### Background

Sensor devices for measuring seismic activity known in the prior art are limited either to measuring translations or rotations. Current seismometers usually work with test masses that are kept, through the influence of external forces applied via a control unit, at rest relative to a sensor housing, i.e. a constant distance between all sides of the test mass and the sensor housing. The measurement signal corresponds to the applied (translational) force or acceleration. At the same time, there are gyroscopes that measure rotations either mechanically or by using a ring laser.

It is an object of the invention to provide a sensor device that can achieve simultaneous measurements of up to six motional degrees of freedom of a test mass, with high accuracy.

### Summary of the Invention

To achieve the above-described object, a sensor device according to claim 1 is provided. Preferred embodiments and optional features of the invention are described in the dependent claims.

According to a first aspect of the invention, a sensor device is provided wherein the housing frame comprises suspension elements, by means of which the test mass is suspended (or, hanging) from mounting sites of the housing frame during a measurement of the up to six motional degrees of freedom the test mass.

This technical solution according to the invention offers allowing for measuring all six degrees of freedom with a high accuracy by using a single device. One important contribution of the invention is that the system of suspension of the test mass acts above its resonance frequency as a freely falling body, and thus, the test mass offers an absolute reference point. The sensor device can record the position of reflected laser beams off the suspended test mass with position dependent detectors (PSD). Due to the geometry of the sensor device, one can then infer the position and orientation in space of the suspended test mass relative to the suspending frame. If the frame is rigidly connected to an object of interest (e.g. floor, building), all six motional degrees of freedom of said object can be measured. Further optional developments of the invention are as follows.

Advantageously, the test mass may be suspended from the mounting sites such that the test mass behaves like an essentially undamped pendulum. The suspension elements and the test mass can be configured such that the test mass behaves (in answer to physical excitation) essentially like a free-falling mass above its respective eigenfrequency. Preferably, the sensor device may be configured to measure the motion of the test mass within a frequency measuring range, wherein the bottom limit frequency of the frequency measuring range is greater than the eigenfrequency of the test mass. The test mass may be minimally damped (which means as little damping as possible within a technical implementation), which herein is referred to as essentially undamped.

In many preferred embodiments, the housing frame comprises a bottom portion, a top portion, and at least one connection member, wherein said bottom portion is adapted to rest on a support surface during a measurement to define a measurement position of the sensor device, wherein the bottom portion is connected to the top portion via the at least one connection member to establish a minimum vertical distance between the bottom portion and the top portion in the measurement position, wherein during a measurement, the base of the test mass is oriented toward the bottom portion.

Advantageously, the suspension elements may be configured such that in the measurement position, the test mass is located between the top portion and the bottom portion and suspended along the vertical distance between the top portion and the bottom portion. In this case it may be preferable that a vertical distance between the base of the test mass and a bottom surface of the bottom portion, said bottom surface being oriented parallel to the base of the test mass, is smaller than the vertical distance between the base of the test mass and a top surface of the top portion, said top surface being oriented parallel to the bottom surface.

Advantageously, the vertical distance between the base of the test mass and the bottom surface may be at least 5 mm, preferably between 5 mm and 15 mm, in particular 10 mm, wherein a vertical distance between the base of the test mass and the top surface is at least 200 mm, preferably between 200 mm and 500 mm, in particular 300 mm.

Advantageously, the mounting of the components may be such that each of the plurality of detectors is mounted to the top portion, and/or components of the laser light system that are configured to direct laser beams to the test mass are mounted to the bottom portion.

Advantageously, at least one of the connection members may comprise damping means, configured to establish a damped connection between the bottom portion and the top portion.

In many embodiments the test mass has the shape of a polyhedron, such as a triangular pyramid, a pyramid with a rectangular base, or a truncated pyramid, wherein preferably the test mass is made of non-magnetic material.

Preferably, each detector surface may be realized as a position sensitive detector, e.g., a quadrant photodiode (QPD) or a position sensitive photodiode (PSD), configured to detect impinging laser beams.

Also preferably, the sensor device may comprise calibration means, configured to generate and transmit a specific translational and/or rotational movement onto the test mass in order to calibrate the measurement of six motional degrees of freedom of the test mass.

Advantageously it may be envisaged that during calibration, the test-mass is in an unsuspended state wherein the base of the test mass contacts a calibration surface of the calibration means, to allow transmission of translational and/or rotational movement onto the test mass, wherein the calibration surface is configured to perform specific translational and/or rotational movements.

Advantageously, the number of side faces of the test mass may be chosen such that it is equal to the number of laser beams created by the laser light system and/ or to the number of detectors.

In an advantageous implementation of the determination of the position and/or orientation of the test mass relative to the housing frame by the processor, homogeneous coordinates may be used.

Advantageously, the laser light system may be configured to create laser beams comprising one or more of: a beam diameter smaller than 1 mm, preferably between 100 $\mu$m and 600 $\mu$m.

Advantageously, the suspension elements may comprise a wire, preferably made of tungsten or glass, e.g. silicon oxide. Preferably, the diameter of the wire is in a typical range between 30 $\mu$m and 50 $\mu$m, preferably between 4 $\mu$m and 20 $\mu$m. Typically, the test mass is connected to a first end of the wire, whereas a second end of the wire (opposite the first end) is connected to a respective mounting site of the housing frame.

According to another aspect of the invention, a sensor for detecting seismic activity, in particular earthquakes, is provided, said sensor comprising a sensor device according to the invention.

## Short Description of the Drawings

In the following, in order to further demonstrate the present invention, illustrative and non-restrictive embodiments are discussed, as shown schematically in the drawings.

Fig. 1     shows a schematic side view of a sensor device to illustrate a measurement principle of the invention;

Fig. 2a     shows a perspective view of a sensor device according to an embodiment of the invention;

Fig. 2b    shows a top view of the sensor device of Fig. 2a;

Fig. 3    shows a top view of the arrangement of the laser light system of the sensor device of Fig. 1; and

Fig. 4    shows the result of the inverse algorithm compared to the original transformation, the largest absolute error for each iteration step is averaged.

## Detailed Description of Embodiments

The detailed discussion of exemplary embodiments of the invention given below discloses the basic ideas, implementation, and further advantageous developments of the invention. It will be evident to the person skilled in the art to freely combine several or all aspects of embodiments discussed here and implement modifications, as deemed suitable for a specific application of the invention. Throughout this disclosure, terms like "advantageous", "exemplary", "typical", "preferably" or "preferred" indicate elements or dimensions which are particularly suitable -but not essential- to the invention or an embodiment thereof, and may be modified wherever deemed suitable by the skilled person, except where expressly required. It is to be appreciated that the invention is not restricted to the exemplary embodiments discussed in the following, which are given for illustrative purpose and merely present suitable implementations of the invention; likewise, any dimensions specified in the drawings indicate one typical implementation and are illustrative only. Within this disclosure, terms relating to a vertical direction, such as "top", "bottom" or "upwards", are to be understood with regard to the local direction of gravity when the device is in a position of operation, and such vertical direction is generally identified with the Z direction, to which the X and Y directions are transversal.

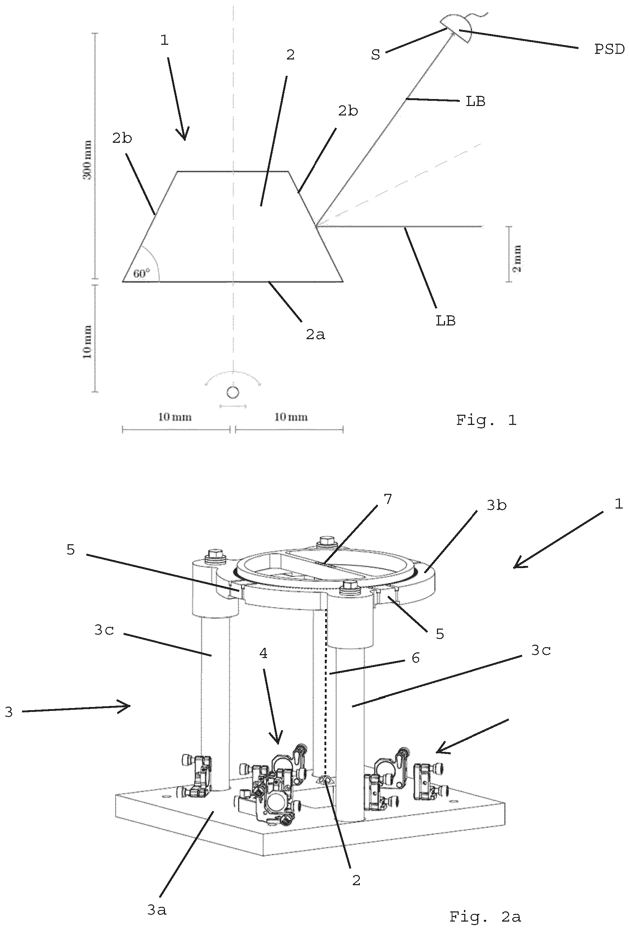

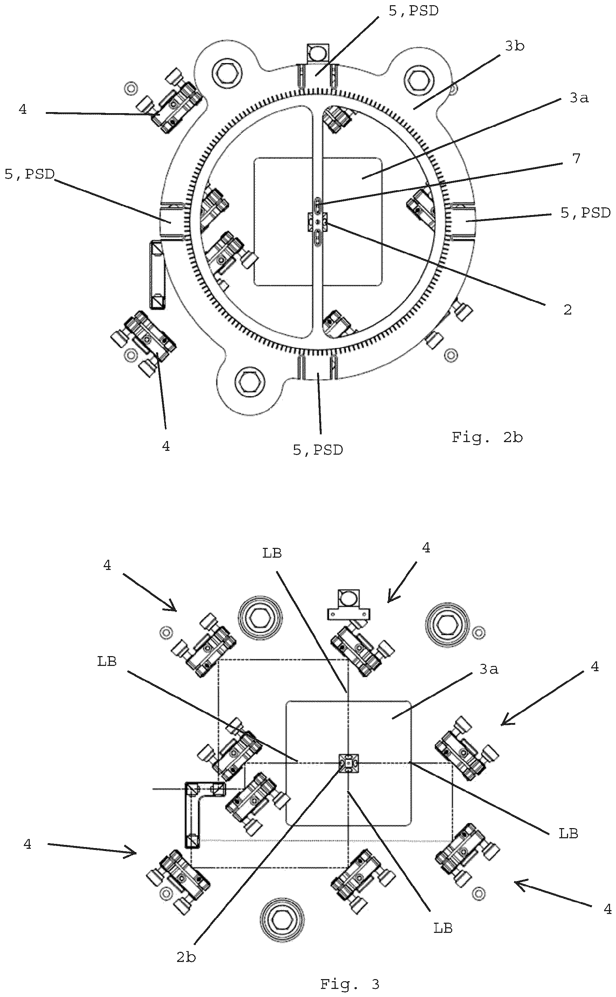

**Fig. 1** shows a simplified sketch to illustrate a measurement principle of a sensor device 1 according to the invention. **Fig. 2a** and **Fig. 2b** show a sensor device 1 according to an embodiment of the invention, which utilizes the concept depicted in Fig. 1, in a schematic perspective view and a top view, respectively.

The sensor device 1 is configured for simultaneous measurement of up to six motional degrees of freedom of a test mass 2. The sensor device 1 comprises a housing frame 3, a test mass 2 moveably attached to the housing frame 3, a laser light system 4, a detector system 5, and a processor (not shown).

The test mass 2 comprises a base 2a and several side faces 2b (at least three, and in the shown embodiment four side faces). Each of the side face 2b is configured to reflect impinging laser light.

Referring to Fig. 3, the laser light system 4 comprises a number of laser sources and is configured to generate a plurality of laser beams LB and direct the laser beams LB to respective side faces 2b of the test mass 2.

The detector system 5 comprises a plurality of position-sensitive detectors PSD, each detector being assigned to a respective side face 2b of the test mass 2. Each of the detectors PSD comprises a detector surface S, and is positioned such that a respective laser beam LB is reflected towards the detector surface S by the respective side face 2b to which the respective detector is assigned. The detectors are configured to create signals, each of which is indicative of a position of the respective reflected laser beam LB on the respective detector surface S.

The sensor device further comprises, or is associated with, a processor (not shown), which is configured to receive the signals from the detectors and therefrom determine the position and orientation of the test mass 2 relative to the housing frame 3, using the detected positions of the reflected laser beams LB on the detector surfaces S. Details of one implementation of this calculation are explained in detail further below.

The housing frame 3 comprises suspension elements 6, by means of which the test mass 2 is suspended from mounting sites 7 of the housing frame 3 during a measurement of the up to six motional degrees of freedom the test mass 2. In the shown embodiment, the test mass 2 is suspended from the mounting sites 7 such that the test mass 2 behaves like an essentially undamped pendulum. The connection members 3c may also comprise damping means, configured to establish a damped connection between the bottom portion and the top portion. In Fig. 1b, the suspension element 6 is indicated via a dotted line. The suspension element 6 can be a wire, cord, string, etc.

The housing frame 3 comprises a bottom portion 3a, a top portion 3b, and one, two, or more connection members 3c, wherein said bottom portion 3a is adapted to rest on a support surface (e.g. the ground surface or a table; not shown) during a measurement to define a measurement position of the sensor device 1. The bottom portion 3a is connected to the top portion 3b via three connection members 3c to establish a minimum vertical distance between the bottom portion 3a and the top portion 3b in the measurement position. During a measurement, the base 2a of the test mass 2 is oriented toward the bottom portion 3a.

The suspension element 6 is configured such that in the measurement position, the test mass 2 is located between the top portion 3b and the bottom portion 3a, so as to be suspended along the vertical distance between the top portion 3a and the bottom portion 3b. The vertical distance between the base 2a of the test mass 2 and a bottom surface of the bottom portion 3a is preferably smaller than the vertical distance between the base 2a of the test mass 2 and a top surface of the top portion 2b. Both the bottom surface and the top surface are typically oriented parallel to the base 2a of the test mass 2.

In the shown embodiment, the vertical distance between the base 2a of the test mass 2 and the bottom surface is 10 mm. Generally, a preferred value of the distance is at least 5 mm.

Each detector PSD of the plurality of detectors is mounted e.g. to the top portion. Components of the laser light system, which are configured to direct laser beams to the test mass 2 are mounted e.g. to the bottom portion 3b. Said components can be, e.g., individually controllable laser light sources.

In the shown embodiment, the test mass 2 has the shape of a truncated pyramid with a rectangular base and is made of non-magnetic material.

The sensor device may also comprise calibration means (not shown), which are configured to generate and transmit a specific translational and/or rotational movement onto the test mass 2 in order to calibrate the measurement of six motional degrees of freedom of the test mass 2. During calibration, the test-mass 2 will typically be in an unsuspended state, wherein the base 2a of the test mass 2 contacts a calibration surface of the calibration means, to allow transmission of translational and/or rotational movement onto the test mass 2. The calibration surface is configured to perform specific translational and/or rotational movements.

The laser light system is configured to create laser beams comprising one or more of: a beam diameter smaller than 1 mm, preferably between 100 $\mu$m and 600 $\mu$m. As an alternative to the laser light system, a non-laser light system emitting other radiation such as non-coherent light, can also be used.

## Theoretical Background and Results

In the following sections, the mathematical and theoretical background of the invention is explained in more detail. Furthermore, various test results and calibrations of the embodiment described above are discussed.

The object of the invention is to present a sensor device capable of measuring the six motional degrees of freedom of an object, such as the test mass. In one preferred embodiment, the test mass can be a reflective pyramid attached on top of a housing frame. Four separate laser beams reflect/bounce off the four faces of the pyramid. Placing four position sensitive photodetectors (e.g. quadrant photodiodes) at a distance from the pyramid, which detect the reflected laser beams respectively, enables the device to gather sufficient information to infer the three translational as well as the three rotational degrees of freedom. In principle already three detectors (yielding two position signals each) could be sufficient, but using more detectors may achieve better noise performance and add robustness. The following description employs four detectors, but the method presented hereinafter can easily be adapted for having more sensors.

### Table I: Parameter Definitions

| Symbol | Definition |
|---|---|
| $h$ | height of the pyramid base above the center of gravity |
| $h_i$ | height of the laser coupler / mirror above the pyramid base for photodiode $i$ |
| $dx$ | translation along x-axis |
| $dy$ | translation along y-axis |
| $dz$ | translation along z-axis |
| $\alpha$ | rotation around z-axis rotation |
| $\beta$ | around y-axis rotation around |
| $\gamma$ | x-axis |
| $\varepsilon_i$ | angle between pyramid base and face $i$ angle between z-axis and incoming beam $i$ angle in plane of the |
| $\phi_i$ | incoming beam $i$, with $\theta = 0 \rightarrow e_x$ height of photodiode $i$ above the pyramid base distance of laser cou- |
| $\theta_i$ | pler $i$ from the pyramid (half) width of the pyramid at its base |
| $h_{PDi}$ | |
| $l_i$ | |
| $l_p$ | |
| $E_{PD}$ | photodiode plane |
| $E$ | pyramid face |
| $[L_1]x$ | incoming light beam |
| $[L_2]x$ | reflected light beam |
| $l_0$ | direction vector of incoming light beam |
| $l_r$ | direction vector of reflected light beam |
| $n_0$ | face normal of the pyramid |
| $M$ | transformation matrix |
| $X_{PD}$ | intersection of reflected beam with the photodiode plane |

(continued)

| Symbol | Definition |
|--------|-----------|
| X | intersection of incoming/reflected beam with the pyramid face |

The proposed method uses the law of reflection in its vector form, which is difficult to do once translations are to be incorporated into a general transformation matrix for the surface the light is to be reflected from. The face normals $n_0$ of the pyramid may be rotated by multiplying with a rotation matrix, but the same is not true for translations. In order to do so, the method utilizes homogeneous coordinates. These extend the 3D cartesian coordinates by a fourth component *w*. Switching from cartesian to homogeneous coordinates maps the 3D space to the *w* = 1 hyperplane. By doing so, translations in 'real' space become a shear operation in 4D which can be represented by a matrix multiplication.

Switching to homogeneous coordinates we can define the relevant quantities as follows;

**Table II: Definitions of geometric quantities in homogeneous coordinates**

| Quantity | Cartesian Coordinates | Homogeneous Coordinates |
|----------|----------------------|------------------------|
| Point: | $x = (x_1, x_2, x_3)$ | $x = (x_1, x_2, x_3, 1)$ |
| Plane: | $n_0 = (n_1, n_2, n_3)$ | $E = (n_1, n_2, n_3, -\sim n \cdot p\sim) p_0 = (p_1, p_2, p_3)$ |
| Line: | $l_0 = (l_1, l_2, l_3) \; p_0 = = (p_1, p_2, p_3)$ | $L_1 = (l_0, l_0 \times p_0)$ |

A line in homogeneous coordinates is defined by 6 coordinates corresponding to the 6 degrees of freedom (one 3D point + direction). The line is also fully defined by its Plücker matrix

$$[L_1]_x \overset{\text{def}}{=} p_0 l_0^T - l_0 p_0^T = \begin{pmatrix} 0 & -L_{01} & -L_{02} & -L_{03} \\ L_{01} & 0 & -L_{12} & -L_{13} \\ L_{02} & L_{12} & 0 & -L_{23} \\ L_{03} & L_{13} & L_{23} & 0 \end{pmatrix}$$

$$L_{ij} = p_i l_j - p_i l_j$$

which is a skew-symmetric 4 × 4 matrix, wherein $p_0$ is a support vector (the position of the laser coupler) and $l_0$ is the direction of the line. As it describes the same line with its 6 degrees of freedom, the Plücker matrix also has only 6 independent entries. The advantage of using a Plücker matrix is that it makes it easy to calculate the intersection with a plane E:

$$X = [L_1]_x \cdot E$$

One basic idea behind the algorithm presented is to first calculate the intersection point between the incoming laser beam with its corresponding pyramid face. The resulting point is taken as the support vector of the reflected line, whose direction is given by the reflection of the incoming laser beam with the face normal. The intersection of the line thus defined with the photodiode plane finally gives the signal recorded in the experiment. Any transformations are performed on the plane representing the pyramid face.

This method is fully general with respect to the incoming beam, the orientation of the photodiode plane and the pyramid face itself.

***Transformations in homogeneous coordinates***

The transformation matrix combining rotations and translations in 4D looks like this:

$$M = \begin{pmatrix} R_{3x3} & d\vec{r} \\ 0 & 1 \end{pmatrix}$$

with $R_{3\times 3}$ being the usual 3D rotation matrix and $d\vec{r} = (dx, dy, dz)$ being the translation vector. Its inverse is defined by:

$$M^{-1} = \begin{pmatrix} R_{3x3}^{-1} & -R_{3x3}^{-1}d\vec{r} \\ 0 & 1 \end{pmatrix} = \begin{pmatrix} R_{3x3}^{T} & -R_{3x3}^{T}d\vec{r} \\ 0 & 1 \end{pmatrix}$$

Every point now transforms by $\vec{p}' = M\vec{p}$. Note that, because vectors in homogeneous coordinates (as opposed to points) are unaffected by $d\vec{r}$, their last coordinate is always 0. This also means that the inner product of two vectors is unchanged by the transformation (as it intuitively should be) because rotations do not change the inner product.

$$Mp = M \cdot \begin{pmatrix} p_x \\ p_y \\ p_z \\ 0 \end{pmatrix} = \begin{pmatrix} R_{3x3} & 0 \\ 0 & 1 \end{pmatrix} \begin{pmatrix} p_x \\ p_y \\ p_z \\ 0 \end{pmatrix}$$

$$R = \begin{pmatrix} R_{3x3} & 0 \\ 0 & 1 \end{pmatrix} = \begin{pmatrix} R_{3x3}^{T} & 0 \\ 0 & 1 \end{pmatrix}^{-1} = (R^{T})^{-1}$$

$$p' \cdot q' = (Mp)^{T}(Mq) = p^{T}M^{T}Mq = p^{T}R^{T}Rq = p^{T}q$$
$$= p \cdot q$$

However, the planes do not transform in the same way. A plane E contains the point $p$ if and only if $p \cdot E = 0$ with both E and $p$ in homogeneous coordinates. This condition must also hold when transforming the plane and the point using the same transformation matrix, which leads to:

$$p' \cdot E' = p'^{T}E' = p^{T}M^{T}(M^{-1})^{T}E = p^{T}(M^{-1}M)^{T}E$$
$$= p^{T}E = 0$$

Therefore, $E' = (M^{-1})^{T}E$. The matrix can be simplified to:

$$(M^{-1})^{T} = \begin{pmatrix} R_{3x3} & 0 \\ -(R_{3x3}^{T}d\vec{r})^{T} & 1 \end{pmatrix}$$

***Reflection in vector form***

The law of reflection can be formulated by using the face normal $n_0$, the reflected beam $l_r$ and the incoming beam $l_0$:

$$l_r = 2(n_0{}^{T}l_0)n_0 - l_0$$

Applying the transformation. we get:

$$l_r = 2(n_0^{T}M^{T}l_0)Mn_0 - l_0$$

***Intersection with photodiode plane***

Putting everything together, the point of incidence on the photodiode is given by:

$$X_{PD} = [L_2]_x E_{PD}$$
$$= (X l_r^T - l_r X^T) E_{PD}$$
$$= \left[ ([L_1]_x E') \left(2(n_0^T M^T l_0) M n_0 - l_0\right)^T - \left(2(n_0^T M^T l_0) M n_0 - l_0\right) ([L_1]_x E')^T \right] E_{PD}$$
$$= \left[ ((p_0 l_0^T - l_0 p_0^T)(M^{-1})^T E) \left(2(n_0^T M^T l_0) M n_0 - l_0\right)^T - \left(2(n_0^T M^T l_0) M n_0 - l_0\right) ((p_0 l_0^T - l_0 p_0^T)(M^{-1})^T E)^T \right] E_{PD}$$

The photodiode signal itself is given by the difference of the above equation for arbitrary M ($X_{PD}$) and the same for M = $M(dx = 0, dy = 0, dz = 0, a = 0, \beta = 0, \gamma = 0) = 1$ ($X_{PD}^0$). This essentially means that the photodiodes are aligned in such a way that their difference signals are exactly 0 for the rest position of the pyramid. However, since they are angled, further analysis steps are needed. The signal on the photodiode corresponds to a point in space with its z-component equal to 0:

$$S = \begin{pmatrix} S_x \\ S_y \\ 0 \end{pmatrix}$$

where S is the signal vector and $S_x$ and $S_y$ are the measured displacements on the photodiode in x and y direction respectively, i.e., on the plane of the photodiode surface. In order to equate this signal to the formula above, the homogeneous coordinates of $X_{PD}$ need to be converted to cartesian ones by 'normalising' its fourth component:

$$\begin{pmatrix} x & y & z & w \end{pmatrix} = \begin{pmatrix} x/w & y/w & z/w & 1 \end{pmatrix}$$

The rescaling does not change the point, because in homogeneous coordinates a 'point' actually represents a line through the origin in $R^4$. The mapping from homogeneous to cartesian coordinates can be written as:

$$T(\vec{x}) = T(x, y, z, w) = \begin{pmatrix} x/w \\ y/w \\ z/w \end{pmatrix}$$

$$\mathbb{R}^4 \to \mathbb{R}^3$$

$$T(k \cdot \vec{x}) = T(\vec{x})$$

By rotating the photodiode plane such that the plane normal coincides with the negative z unit vector $e_z$, every point or vector on the plane will have its z component equal to 0:

$$S = R_{PD}(T(X_{PD}) - T(X_{PD}^0))$$

$$R_{PD}^{-1} S = T(X_{PD}) - T(X_{PD}^0)$$

$$X_{PD} = R_{PD}^T S + X_{PD}^0$$

The involved quantities are cartesian points, so the rotation matrix $R_{PD}$ is the normal rotation matrix in 3D. It can be obtained via

$$R_{PD} = 1 + \mathbf{K} + \mathbf{K}^2 \frac{1}{1 + n_{PD} \mid e_z}$$

where K is the cross-product matrix defined by

$$K = \begin{pmatrix} 0 & -k_z & k_y \\ k_z & 0 & -k_x \\ -k_y & k_x & 0 \end{pmatrix} = \begin{pmatrix} 0 & -(E_{PD} \times e_z)_z & +(E_{PD} \times e_z)_y \\ +(E_{PD} \times e_z)_z & 0 & -(E_{PD} \times e_z)_x \\ -(E_{PD} \times e_z)_y & +(E_{PD} \times e_z)_x & 0 \end{pmatrix}$$

This gives the final equation:

$$S = R_{PD}\left\{ T\left( \left[ ((p_0 l_0^T - l_0 p_0^T)(M^{-1})^T E) \, (2(n_0^T M^T l_0)M n_0 - l_0)^T - \right.\right.\right.$$
$$\left.\left.\left. (2(n_0^T M^T l_0)M n_0 - l_0) \, ((p_0 l_0^T - l_0 p_0^T)(M^{-1})^T E)^T \right] E_{PD} \right) - T(X_{PD}^0) \right\}$$
$$(*)$$

In the forward direction (known transformation) the equation permits to calculate the signal on the photodiodes. In the reverse direction everything except the transformation matrix is known. The transformation matrix is given by:

$$M = \begin{pmatrix} \cos\alpha\cos\beta & -\sin\alpha\cos\gamma + \sin\beta\sin\gamma\cos\alpha & \sin\alpha\sin\gamma + \sin\beta\cos\alpha\cos\gamma & dx \\ \sin\alpha\cos\beta & \sin\alpha\sin\beta\sin\gamma + \cos\alpha\cos\gamma & \sin\alpha\sin\beta\cos\gamma - \sin\gamma\cos\alpha & dy \\ -\sin\beta & \sin\gamma\cos\beta & \cos\beta\cos\gamma & dz \\ 0 & 0 & 0 & 1 \end{pmatrix}$$

Even by performing a small angle approximation for the transformation matrix, this results in products of the unknown angles, which makes this inverse problem non-linear in principle.

However, a first order approximation around the rest position can be made as follows. Let $f(\vec{dr})$ be the transformation $T$ applied to $X_{PD}$:

$$f(\vec{dr}) = f(dx, dy, dz, \alpha, \beta, \gamma) = T(X_{PD}(dx, dy, dz, \alpha, \beta, \gamma))$$
$$\approx f(0) + \left.\frac{\partial f}{\partial(dx)}\right|_{\vec{dr}=0} dx + \left.\frac{\partial f}{\partial(dy)}\right|_{\vec{dr}=0} dy + \left.\frac{\partial f}{\partial(dz)}\right|_{\vec{dr}=0} dz + \left.\frac{\partial f}{\partial\alpha}\right|_{\vec{dr}=0} \alpha + \left.\frac{\partial f}{\partial\beta}\right|_{\vec{dr}=0} \beta + \left.\frac{\partial f}{\partial\gamma}\right|_{\vec{dr}=0} \gamma$$
$$= T(X_{PD}^0) + f_1(\vec{dr})$$

The equation for the photodiode signal simplifies to $S = R_{PD} f_1(d{\sim}r)$ respectively

$$f_1(\vec{dr}) = R_{PD}^{-1} S = R_{PD}^T S$$

The above expression gives three equations for every photodiode, which produces a system of 12 linear equations, which can be written in matrix form with the matrix A given below.

$$A \cdot \begin{pmatrix} dx \\ dy \\ dz \\ \gamma \\ \beta \\ \alpha \end{pmatrix} = \begin{pmatrix} R_{PD}^1 S^1 \\ R_{PD}^2 S^2 \\ R_{PD}^3 S^3 \\ R_{PD}^4 S^4 \end{pmatrix}$$

The entries of A correspond to the partial derivatives of $f(\vec{dr})$, and the matrix itself is the Jacobian of the function f. Writing down the function explicitly, we have:

$$f(d\vec{r}) = \begin{pmatrix} X_{PD}^{x} \\ X_{PD}^{y} \\ X_{PD}^{x} \\ X_{PD}^{y} \\ X_{PD}^{x} \\ X_{PD}^{y} \end{pmatrix}$$

*Algorithm*

Inducing the transformation from the photodiode measurements boils down to solving the nonlinear optimization problem with the optimization function $g(d\vec{r}) = \|f(d\vec{r}) - S\|_{2}^{2}$. Solving the equation in a least-square sense can be done with the Gauss-Newton method. The starting point for the optimization is taken by the result of the inverse of the linear approximation. All subsequent optimization steps are calculated according to the Gauss-Newton update rule:

$$d\vec{r}_{n+1} = d\vec{r}_{n} - (J^{T}J)^{-1}J^{T}g(d\vec{r}_{n})$$

which, in the present case, translates to:

$$d\vec{r}_{n+1} = d\vec{r}_{n} - (A^{T}A)^{-1}A^{T}\big|_{d\vec{r}_{n}} g(d\vec{r}_{n})$$

The Jacobian and the function $g(d\vec{r})$ are implemented and calculated using the computer algebra systems SymPy and Mathematica. Because of the involvement of trigonometric functions in the transformation, the calculations will be relatively small. The computer algebra systems are used to perform series expansion of eqn. (*), and linear as well as quadratic and cubic expansions have been done. It is to be noted that this expansion is done before taking the derivative for the Jacobian.

**Performance**

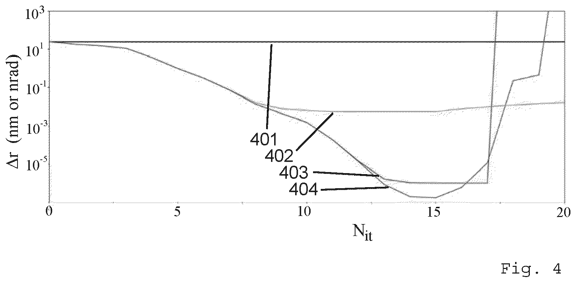

The performance of the algorithm has been tested by creating a (normally distributed) random timeseries of translations and rotations with $10^4$ samples. The forward transformation (giving the detector responses) is applied to the timeseries, and the reverse algorithm to these results. The algorithm has been used with series expansion up to quadratic, third and fourth order in the angles, and a fixed number of iterations in the Newton-Gauss algorithm is performed. The result of the algorithm is then compared to the original input timeseries. Fig. 4 shows an example of a typical result for a normal distribution with a standard deviation of 100um and $100\mu$rad respectively, namely, the behavior of the mean maximum absolute error $\Delta$r (in units of nm or nrad) as a function of the number of iterations $N_{it}$, where the lines 401, 402, 403, 404 represent the results of first order, quadratic, third order, and fourth order degree, respectively.

**LIST OF REFERENCES**

[1] I. Ruchlin. Z. B. Etienne, and T. W. Baumgarte (2017), 1712.07658, URL http://arxiv.org/abs/1712.07658http://dx.doi.org/10.1103/PhysRevD.97.064036.

[2] L. M. Manojlović. Optik 127. 7631 2016), ISSN 00301026.

[3] L. M. Manojlović and Ž. P. Barbarić, IEEE Transactions on Instrumentation and Measurement **58**, 681 (2009), ISSN 00189456.

[4] S. M. Barnett, C. Fabre, and A. Maitre, European Physical Journal D 22, 513 (2003), ISSN 14346060, URL https://link-springer-com.uaccess.univie.ac.at/articole/10.1140/apjd/e2003-00003-3.

[5] L. M. Manojlović, Applied Optics 50, 3461 (2011), ISSN 15394522, URL https://www.osapublisbing.org/view media. cfm?uri=ao-50-20-3461&seq=0&html=truehttps://www.osapublishing.org/abstract.cfm?uri=ao-50-20-3461https: //ww.osapublishing.org/ao/abstract.cfm?uri=ao-50-20-3461.

[6] J. Zhang, W. Qian, G. Gu, K. Ren, Q. Chen, C. Mao, G. Cai, Z. Liu, and L. Xu, Applied Optics 57, 6898 (2018), ISSN 1559-128X, URL https://ww.osapublishing.org/viewmedia.cfm?uri=ao-57-24-6898&seq=0&html=truehttps://www.osapublishing.org/abstract.cfm?uri=ao-57-24-6898https://www.osapublishing.org/ao/abstract.cfm?uri=ao-57-24-6898.

[7] LIGO-T1200063-v2: ISC QPD Test Result - InGaAs QPD FCI-Q3000, URL https://dcc.ligo.org/LIGO-T1200063/ public.

**Claims**

1. Sensor device (1) for simultaneous measurement of up to six motional degrees of freedom of a test mass (2), wherein the sensor device comprises:

   * a housing frame (3),
   * a test mass (2), wherein the test mass is moveably attached to the housing frame (3), said test mass (2) comprises a base (2a) and at least three, preferably four, side faces (2b), wherein each side face (2b) is configured to reflect impinging laser light,
   * a laser light system (4), configured to generate a plurality of laser beams (LB) and to direct each of said laser beams (LB) to a respective side face (2b) of the test mass (2),
   * a detector system (5), comprising a plurality of position-sensitive detectors (PSD), wherein each detector (PSD) of said plurality of position-sensitive detectors (PSD) comprises a detector surface (S), wherein each detector (PSD) is assigned to a respective side face (2b) of the test mass (2), and is positioned such that a respective laser beam (LB) is reflected towards the detector surface (S) of the respective detector (PSD) by the side face (2b) to which the respective detector (PSD) is assigned, wherein the plurality of detectors (PSD) is configured to create a plurality of signals, wherein each signal is indicative of a position of the respective reflected laser beam (LB) on the respective detector surface (S),
   * a processor, configured to receive the plurality of signals created by the plurality of detectors (PSD) and to determine the position and orientation of the test mass (2) relative to the housing frame (3) based on the detected positions of the reflected laser beams (LB) on the detector surfaces (S), wherein a detected change of the position of a specific reflected laser beam (LB) on the respective detector surface (S) is indicative of a change of the position and/or orientation of the test mass (2) relative to the housing frame (3),

   **characterized in that**
   the housing frame (3) comprises suspension elements (6), by means of which the test mass (2) is suspended from mounting sites (7) of the housing frame (3) during a measurement of the up to six motional degrees of freedom the test mass (2).

2. Sensor device (1) according to claim 1, wherein the test mass (2) is suspended from the mounting sites (7) such that the test mass (2) behaves like an essentially undamped pendulum.

3. Sensor device (1) according to any one of the preceding claims, wherein the housing frame (3) comprises a bottom portion (3a), a top portion (3b), and at least one connection member (3c), wherein said bottom portion (3a) is adapted to rest on a support surface during a measurement to define a measurement position of the sensor device (1), wherein the bottom portion (3a) is connected to the top portion (3b) via the at least one connection member (3c) to establish a minimum vertical distance between the bottom portion (3a) and the top portion (3b) in the measurement position, wherein during a measurement, the base (2a) of the test mass (2) is oriented toward the bottom portion (3a).

4. Sensor device (1) according to claim 3, wherein the suspension elements (6) are configured such that in the measurement position, the test mass (2) is located between the top portion (3b) and the bottom portion (3a) and suspended along the vertical distance between the top portion (3b) and the bottom portion (3a), wherein a vertical distance between the base (2a) of the test mass (2) and a bottom surface of the bottom portion (3a), said bottom surface being oriented parallel to the base (2a) of the test mass (2), is smaller than the vertical distance between the base (2a) of the test mass (2) and a top surface of the top portion (3b), said top surface being oriented parallel to the bottom surface.

5. Sensor device (1) according to claim 3 or 4, wherein the vertical distance between the base (2a) of the test mass (2) and the bottom surface is at least 5 mm, preferably between 5 mm and 15 mm, in particular 10 mm, wherein a vertical distance between the base of the test mass and the top surface is at least 200 mm, preferably between 200 mm and 500 mm, in particular 300 mm.

6. Sensor device (1) according to any one of claims 3 to 5, wherein each detector (PSD) of the plurality of detectors is mounted to the top portion (3b), and/or wherein components of the laser light system (4) that are configured to direct laser beams (LB) to the test mass (2) are mounted to the bottom portion (3a).

7. Sensor device (1) according to any one of claims 3 to 6, wherein at least one of the connection members (3c) comprises damping means, configured to establish a damped connection between the bottom portion (2a) and the top portion (2b).

8. Sensor device (1) according to any one of the preceding claims, wherein the test mass (2) has the shape of a polyhedron, in particular a triangular pyramid, a pyramid with a rectangular base, or a truncated pyramid, wherein preferably the test mass (2a) is made of non-magnetic material.

9. Sensor device (1) according to any one of the preceding claims, wherein each detector surface (S) is realized as a position sensitive detector, e.g., a quadrant photodiode or a position sensitive photodiode, configured to detect impinging laser beams (LB).

10. Sensor device (1) according to any one of the preceding claims, wherein the sensor device (1) comprises calibration means, configured to generate and transmit a specific translational and/or rotational movement onto the test mass (2) in order to calibrate the measurement of six motional degrees of freedom of the test mass (2).

11. Sensor device (1) according to claim 10, wherein during calibration, the test-mass (2) is in an unsuspended state, wherein the base (2a) of the test mass (2) contacts a calibration surface of the calibration means, to allow transmission of translational and/or rotational movement onto the test mass (2), wherein the calibration surface is configured to perform specific translational and/or rotational movements.

12. Sensor device (1) according to any one of the preceding claims, wherein the number of side faces (2b) of the test mass (2) is equal to the number of laser beams (LB) created by the laser light system (4) and/or to the number of detectors (PSD).

13. Sensor device (1) according to any one of the preceding claims, wherein the determination of the position and/or orientation of the test mass (2) relative to the housing frame (3) by the processor uses homogeneous coordinates.

14. Sensor device (1) according to any one of the preceding claims, wherein the laser light system (4) is configured to create laser beams (LB) comprising one or more of: a beam diameter smaller than 1 mm, preferably between 100 $\mu$m and 600 $\mu$m.

15. Sensor device (1) according to any one of the preceding claims, wherein the suspension elements (6) comprise a wire, made of tungsten or glass, e.g. silicon oxide, wherein the diameter of the wire is between 30 $\mu$m and 50 $\mu$m, preferably between 4 $\mu$m and 20 $\mu$m, wherein the test mass is connected to a first end of the wire, wherein a second end of the wire, opposite the first end, is connected to a respective mounting site (7) of the housing frame (3).

16. Sensor for detecting seismic activity, in particular earthquakes, said sensor comprising a sensor device (1) according to any one of the preceding claims.

Fig. 1

Fig. 2a

Fig. 2b

Fig. 3

Fig. 4

Europäisches
Patentamt

European
Patent Office

Office européen
des brevets

# EUROPEAN SEARCH REPORT

**Application Number**

EP 24 21 3963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUARCAYA V ET AL: "Five degrees of freedom test mass readout via optical levers", CLASSICAL AND QUANTUM GRAVITY, INSTITUTE OF PHYSIC PUBLISHING, BRISTOL, GB, vol. 37, no. 2, 19 December 2019 (2019-12-19), page 25004, XP020348425, ISSN: 0264-9381, DOI: 10.1088/1361-6382/AB5C73 [retrieved on 2019-12-19] | 1 | INV. G01P15/093 G01B11/00 G01D11/30 G01V1/18 ADD. G01P15/18 |
| Y | * abstract, sections 1-4; figures 1-5 * ----- | 1-16 | |
| Y | BERGMANN GERALD ET AL: "A torsion balance as a weak-force testbed for novel optical inertial sensors", CLASSICAL AND QUANTUM GRAVITY, INSTITUTE OF PHYSIC PUBLISHING, BRISTOL, GB, vol. 41, no. 7, 5 March 2024 (2024-03-05), XP020489948, ISSN: 0264-9381, DOI: 10.1088/1361-6382/AD29E8 [retrieved on 2024-03-05] * abstarct; sections 2-4; figures 1-7 * ----- -/-- | 1-16 | TECHNICAL FIELDS SEARCHED (IPC) G01P G01V G01B G01D |

The present search report has been drawn up for all claims

| Place of search | Date of completion of the search | Examiner |
|---|---|---|
| Munich | 10 April 2025 | Schwarz, Cornelia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

**Application Number**

EP 24 21 3963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ACERNESE F ET AL: "An optical readout system for the drag-free control of LISA; An optical readout system for the drag-free control of LISA", CLASSICAL AND QUANTUM GRAVITY, INSTITUTE OF PHYSIC PUBLISHING, BRISTOL, GB, vol. 22, no. 10, 21 May 2005 (2005-05-21), pages S279-S285, XP020085759, ISSN: 0264-9381, DOI: 10.1088/0264-9381/22/10/020 * abstract; section 2; figures 1-3 * | 10,11,14 | |
| A | US 2003/011787 A1 (CHO HYUNG SUCK [KR] ET AL) 16 January 2003 (2003-01-16) * the whole document * | 8 | |

TECHNICAL FIELDS
SEARCHED    (IPC)

The present search report has been drawn up for all claims

| Place of search | Date of completion of the search | Examiner |
|---|---|---|
| Munich | 10 April 2025 | Schwarz, Cornelia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 3963

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | Publication date | Patent family member(s) | | Publication date |
|---|---|---|---|---|
| US 2003011787 A1 | 16-01-2003 | JP | 3522710 B2 | 26-04-2004 |
| | | JP | 2002340519 A | 27-11-2002 |
| | | KR | 20020082977 A | 01-11-2002 |
| | | US | 2003011787 A1 | 16-01-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. M. BARNETT** ; **C. FABRE** ; **A. MAITRE**. *European Physical Journal D*, 2003, vol. 22, ISSN 14346060, 513, https: //link-springer-com.uaccess.univie.ac. at/articole/10.1140/apjd/e2003-00003-3

- **J. ZHANG** ; **W. QIAN** ; **G. GU** ; **K. REN** ; **Q. CHEN** ; **C. MAO** ; **G. CAI** ; **Z. LIU** ; **L. XU**. *Applied Optics*, 2018, vol. 57, ISSN 1559-128X, 6898, https://ww.osapubl-ishing.org/viewmedia.cfm?uri=ao-57-24-6898&seq=0&html=truehttps: //www.osapublishing. org/abstract.cfm?uri=ao-57-24-6898https://www. osapublishing.org/ao/abstract.cfm?uri= ao-57-24-6898
- *LIGO-T1200063-v2: ISC QPD Test Result - InGaAs QPD FCI-Q3000*, https://dcc.ligo.org/LIGO-T1200063/ public